# EUROPÄISCHE PATENTSCHRIFT

(11) **EP 1 614 937 B1**
(45) Veröffentlichungstag und Bekanntmachung des Hinweises auf die Patenterteilung: **15.09.2010**
(21) Anmeldenummer: 05450118.4
(22) Anmeldetag: 08.07.2005
(51) Int. Cl.: F16H 61/30, F15B 21/04, F15B 11/028

(54) **Schalteinrichtung für Gangwechselgetriebe von Kraftfahrzeugen sowie Ventilanordnung dafür**
Gear shifting device for a vehicle transmission and valve assembly therefore
Dispositif de changement de vitesse d'une transmission pour véhicule et montage de valves associées

(30) Priorität: 08.07.2004 AT 11612004
(43) Veröffentlichungstag der Anmeldung: 11.01.2006
(73) Patentinhaber: Hoerbiger Automatisierungstechnik Holding GmbH, 86956 Schongau (DE)
(72) Erfinder: Dörfler, Erich, 86899 Landsberg (DE)
(74) Vertreter: Grättinger Möhring von Poschinger Patentanwälte Partnerschaft

(56) Entgegenhaltungen:
- EP-A- 0 596 354
- DE-A1- 3 038 797
- JP-A- 63 231 023
- US-A- 5 577 534

## Beschreibung

Die Erfindung betrifft eine Schalteinrichtung für Gangwechselgetriebe von Kraftfahrzeugen, zur Unterstützung der Schaltkraft durch Hilfsenergie, umfassend eine pneumatische Hilfseinrichtung und ein Druckluft-Versorgungssystem, enthaltend eine Ventilanordnung mit einem steuerbaren Abschaltventil und einem Druckregelventil mit Ventilsitz, Schaltkörper, strömungstechnisch hinter dem Ventilsitz angeordnetem Druckregelkolben und Druckentlastungsöffnung, sowie eine Ventilanordnung, insbesonders für eine Schalteinrichtung für Gangwechselgetriebe von Kraftfahrzeugen, zur Unterstützung der Schaltkraft durch Hilfsenergie, umfassend eine pneumatische Hilfseinrichtung und ein Druckluft-Versorgungssystem, mit einem steuerbaren Abschaltventil und einem Druckregelventil mit Ventilsitz, Schaltkörper, strömungstechnisch hinter dem Ventilsitz angeordnetem Druckregelkolben und Druckentlastungsöffnung.

Für pneumatische Schaltkraftunterstützungen werden der Luftversorgung üblicherweise Druckregelventile sowie auch getrennt davon Abschaltventile vorgeschaltet. Die Druckregelventile sollen dabei die maximale Kraft auf die Synchronringe im Getriebe begrenzen. Abschaltventile sind vorgesehen, um einen Gangwechsel ohne Kupplungsbetätigung zu verhindern. Diese zur Schonung des Getriebes als auch zur erhöhten Fahrsicherheit beitragenden Elemente sind jedoch im ohnedies schon beengten Einbauraum des Getriebes und der Schaltunterstützung schwierig unterzubringen. Auch ist das schaltungstechnische Zusammenspiel der beiden separaten Ventile ein zusätzlicher Aufwand.

In der DE 30 38 797 A1 ist ein klassisches Magnet-Regelventil geoffenbart, das ohne die Aktivierung des Magneten nicht in der Lage ist, einen voreingestellten Druck ohne Fremdsteuerung zu regeln. Diese Regelung erfolgt ausschließlich über den Magneten, der bei proportionaler Ansteuerung eine regelbare Kraft auf die Ventilteile ausübt, welche daraufhin den Durchfluß proportional steuern. Die Rückwirkung auf den Magneten beschränken sich im Wesentlichen auf die Federkräfte. Überdies wird durch den Anschlag bei Betätigung des Magneten der Hub der Ventilteile sehr früh begrenzt und gegen das Gehäuse fixiert. Die beiden Ventilsitze gehören funktional unbedingt zusammen und ergeben im Zusammenspiel die Druckregelfunktion, jedoch keinerlei mit der vorliegenden Erfindung vergleichbare steuerbare Abschaltfunktion. Auch die EP 596 354 A2 hat ein Regelventil zum Gegenstand, wobei lediglich die zusätzlich vorgesehene Vorsteuerung des eigentlichen Regelventils einen Unterschied zur DE 30 38 797 A1 darstellt.

Die Aufgabe der Erfindung ist es daher, eine Schalteinrichtung anzugeben, die höchste Funktionssicherheit, insbesonders für das Zusammenspiel von Abschalt- und Druckregelventil, mit geringstmöglichem steuerungstechnischen und auch pneumatischen Verschaltungsaufwand sowie kleiner Baugröße verbindet. Eine weitere Aufgabe der Erfindung ist eine Ventilanordnung, die mit den gleichen Vorteilen ein Abschaltventil und ein Druckregelventil in einer Weise kombiniert.

Zur Lösung der ersten Aufgabe ist erfindungsgemäß vorgesehen, daß das Abschaltventil und das Druckregelventil in einer schaltungstechnisch gekoppelten Einheit zusammengefasst sind. Damit können der Aufwand für die nötigen Steuerleitungen als auch mögliche Störquellen halbiert werden.

Um auch noch die Baugröße soweit möglich vermindern zu können, sind gemäß einer vorteilhaften Ausführungsform der Erfindung das Abschaltventil und das Druckregelventil auch noch in einem gemeinsamen Gehäuse angeordnet.

Die zweite genannte Aufgabe wird erfindungsgemäß dadurch gelöst, daß in der eingangs angegebenen Ventilanordnung das Abschaltventil und das Druckregelventil schaltungstechnisch gekoppelt sind.

Gemäß einer vorteilhaften Ausführungsform wird diese Kopplung dadurch erreicht, daß das Abschaltventil durch den Ventilsitz und Schaltkörper des Druckregelventils gebildet ist.

Um dabei die Abschaltfunktion sicherzustellen, ist dabei vorgesehen, daß der Schaltkörper in Neutral- oder Ruhestellung den Ventilsitz und damit die Passage zum Druckregelkolben abdichtet.

Um dann bei der oben beschriebenen Ausführungsform die Druckregelfunktion zu aktivieren, ist gemäß einem weiteren Erfindungsmerkmal der Schaltkörper des Abschalt- und Druckregelventils durch einen weiteren Schaltkörper in Öffnungsrichtung mit einer Kraft beaufschlagbar.

Gemäß einer ersten Ausführungsform der Erfindung ist der weitere Schaltkörper durch einen mit Druckmittel beaufschlagten, vorzugsweise pneumatischen, Schaltkolben gebildet.

Eine andere Alternative hingegen sieht vor, daß der weitere Schaltkörper elektrisch, elektromagnetisch oder elektromechanisch betätigbar ist.

Wenn bei diesen Anordnungen gemäß dem weiteren Erfindungsmerkmal vorgesehen ist, daß in Neutral- oder Ruhestellung der Ventilanordnung der weitere Schaltkörper maximal bis zu einem Anschlag am Schaltkörper des Abschalt- und Druckregelventils reicht, ist für die Ruhestellung die Abschaltfunktion sichergestellt.

Um nach Freigabe der Druckluftzufuhr die Druckregelfunktion zu gewährleisten, ist bei der erfindungsgemäßen obigen Konstruktion der Ventilanordnung vorgesehen, daß ein weiterer Anschlag für den weiteren Schaltkörper auf der Hinterseite des Druckregelkolbens vorgesehen ist, wobei in Ruhestellung der Ventilanordnung der Abstand zwischen dem weiteren Schaltkörper und dem weiteren Anschlag am Druckregelkolben größer ist als der Abstand zwischen dem weiteren Schaltkörper und dem ersten Anschlag am Schaltkörper des Abschalt- und Druckregelventils.

Gemäß einer vorteilhaften Ausführungsform der Erfindung ist zur einfachen Sicherstellung der Druckregelfunktion vorgesehen, daß der weitere Schaltkörper des Abschalt- und Druckregelventils über den gesamten Arbeitshub des Druckregelkolbens an diesem dichtend und eine Passage zur Druckentlastungsöffnung verschließend anliegt, allenfalls mit einer zapfenförmigen Verlängerung, und in der maximal ausgelenkten Endposition des Druckregelkolbens der Schaltkörper des Abschalt- und Druckregelventils wieder den Ventilsitz und damit die Passage zum Druckregelkolben abdichtet, während gleichzeitig der Druckregelkolben den weiteren Schaltkörper von der Passage abhebt und so die Passage zur Druckentlastungsöffnung freigibt.

Gemäß einer anderen Ausführungsform der Erfindung ist hingegen vorgesehen, daß der Schaltkörper des Abschalt- und Druckregelventils über den gesamten Arbeitshub des Druckregelkolbens am weiteren Schaltkörper dichtend und eine zumindest teilweise durch den weiteren Schaltkörper führende Passage zur Druckentlastungsöffnung verschließend anliegt, allenfalls mit einer zapfenförmigen Verlängerung, und in der maximal ausgelenkten Endposition des Druckregelkolbens der Schaltkörper des Abschalt- und Druckregelventils wieder den Ventilsitz und damit die Passage zum Druckregelkolben abdichtet, während gleichzeitig der weitere Schaltkörper vom Schaltkörper des Abschält- und Druckregelventils abhebt und so die Passage zur Druckentlastungsöffnung freigibt.

In der nachfolgenden Beschreibung soll die Erfindung anhand der beigefügten Zeichnungen von bevorzugten Ausführungsbeispielen näher erläutert werden.

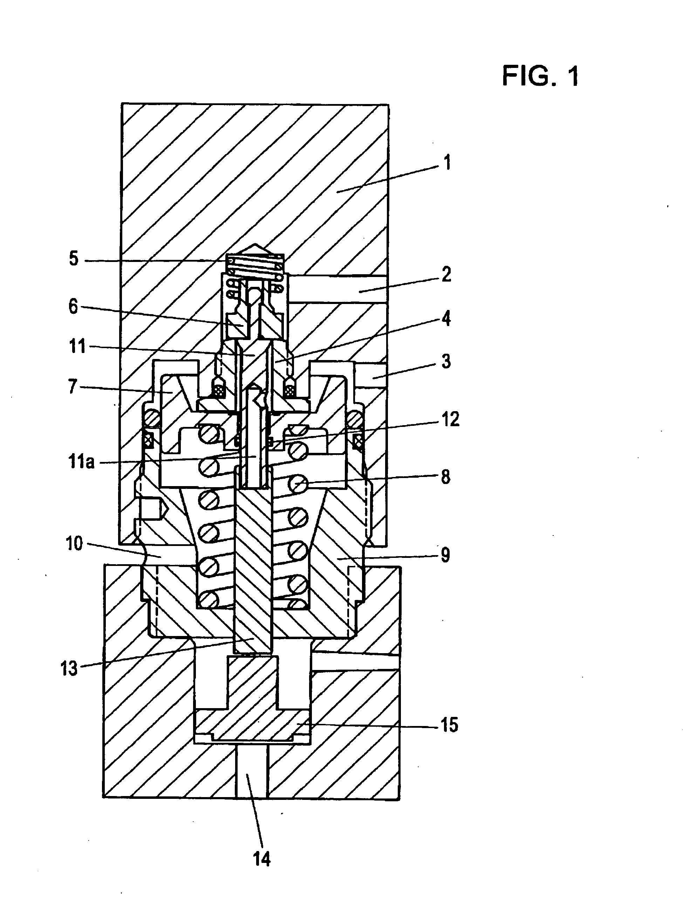

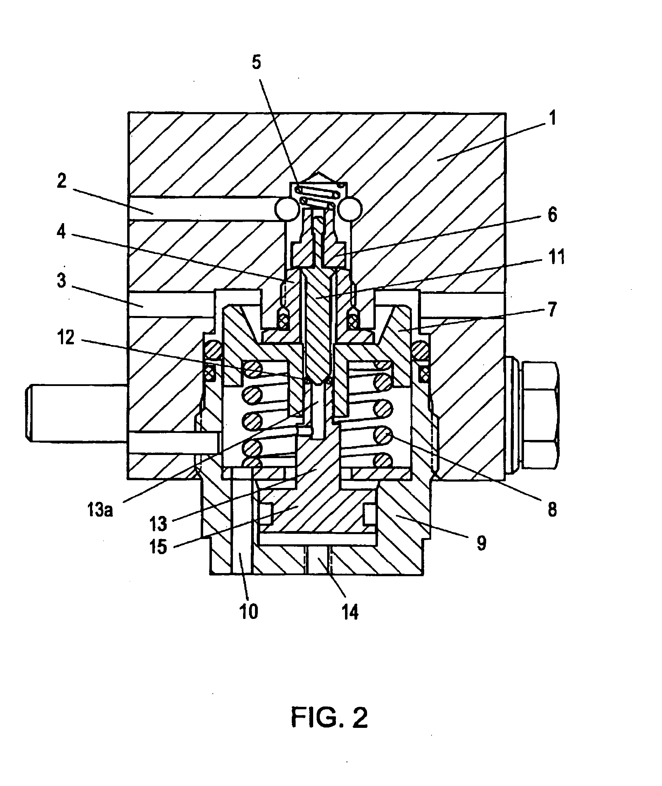

Dabei zeigt die Fig. 1 eine erfindungsgemäße Ventilanordnung in einer ersten Ausführungsform und Fig. 2 ist eine weitere Ausführungsform einer erfindungsgemäßen Ventilanordnung.

In einem Gehäuse 1 mit einem Anschluß 2 für die Luftversorgung, insbesonders für Druckluft für eine pneumatische Schaltunterstützung, und einem Anschluß 3 für einen Verbraucher, insbesonders einem mit einem Fahrzeuggetriebe verbundenen pneumatischen Schaltservo, ist ein ortsfester Ventilsitz 4 vorgesehen. An diesem zwischen Anschluß 2 und Anschluß 3 eingesetzten Ventilsitz 4 liegt, von der Feder 5 in Schließrichtung beaufschlagt, in Ruhestellung der Ventilanordnung ein erster Schaltkörper 6 dichtend auf.

Auf der dem ersten Schaltkörper 6 entgegengesetzten Seite des Ventilsitzes 4 ist ein Druckregelkolben 7 vorgesehen, der von einer Druckregelfeder 8 in Richtung auf den Ventilsitzes 4 beaufschlagt ist. Die Druckregelfeder 8 stützt sich dabei in einem topfartigen Gehäuse 9 ab, das mit dem Gehäuse 1 verbunden ist und eine Entlüftungspassage 10 aufweist.

Vom ersten Schaltkörper 6 erstreckt sich eine Verlängerung 11 durch den Ventilsitz 4 und auch abgedichtet mittels Dichtring 12 durch eine zentrale Bohrung des Druckregelkolbens 7 hindurch bis zu einem zweiten Schaltkörper 13. In der Verlängerung 11 ist eine Passage 11a ausgearbeitet, die von einer Stelle stromab der Dichtkante des Ventilsitzes 4 für den ersten Schaltkörper 6 ausgeht und in den Raum hinter dem Druckregelkolben 7 führt, wo sie durch den zweiten Schaltkörper 13 verschlossen ist, wenn dieser zweite Schaltkörper 13 an der Verlängerung 11 anliegt.

Der zweite Schaltkörper 13 kann durch einen über den Steueranschluß 14 mit Druckmittel, vorzugsweise mit Steuerluft, beaufschlagbaren Steuerkolben 15 in Richtung auf den Ventilsitz 4 hin beaufschlagt werden. Zweiter Schaltkörper 13 und Steuerkolben 15 können auch einstückig miteinander ausgeführt oder lösbar miteinander verbunden sein. Wie aus der Fig. 1 deutlich ersichtlich ist, ist in Ruhestellung der Ventilanordnung der Abstand zwischen dem zweiten Schaltkörper 13 und der Verlängerung 11 des ersten Schaltkörpers 6 geringer als der Abstand zwischen dem zweiten Schaltkörper 13 und der Rückseite des Druckregelkolbens 7.

In Ruhestellung bleibt durch den ersten Schaltkörper 6 der Weg zwischen dem Anschluß 2 der Luftversorgung und dem Anschluß 3 für den Verbraucher verschlossen. Sobald Steuerluft auf den Steuerkolben 15 wirkt, verschiebt dieser den zweiten Schaltkörper 13, bis zuerst der zweite Schaltkörper 13 an der Verlängerung 11 anliegt und die Passage 11a abdichtet und anschließend der erste Schaltkörper 6 vom Ventilsitz 4 abhebt. Damit ist die Verbindung zwischen Luftversorgung und Verbraucher freigegeben und die Druckregelfunktion kann einsetzen. Der zweite Schaltkörper 13 bewegt sich aber noch weiter, bis er schließlich am Druckregelkolben 7 anschlägt und sich dann während der Druckregelfunktion synchron mit diesem bewegt. Die Funktion ist somit einem üblichen Druckregelventil gleichgestellt. Die Abdichtung der Passage 11a durch den zweiten Schaltkörper 13 übernimmt die Funktion, welche bislang durch einen O-Ring zwischen Regelkörper und Schaltkörper bei herkömmlichen Ventilen erzielt war.

Für die Druckregelfunktion der von der Luftversorgung über den Anschluß 2, vorbei am Schaltkörper 6, durch den Ventilsitz 4 zum Anschluß 3 für den Verbraucher strömenden Druckluft, wird der Druckregelkolben 7 wird bei steigendem Innendruck gegen die Wirkung der Druckregelfeder 8 verschoben. Wenn dabei der Druck unzulässig hoch ansteigt, wird der Druckregelkolben 7 schließlich soweit verschoben, daß der erste Schaltkörper 6 wieder am Ventilsitz 4 abdichtet. Damit wird die Druckluftzufuhr über den Anschluß 2 abgesperrt. Der Druck kann dann, nach Abheben des zweiten Schaltkörpers 13 von der Verlängerung 11, über die Passage 11a in den Raum hinter dem Druckregelkolben 7, in welchem sich auch die Druckregelfeder 8 befindet, und schließlich die Entlüftungspassage 10 abgebaut werden.

Bei der Ausführungsform der Fig. 2 ist die Verlängerung 11 des ersten Schaltkörpers 6 geschlossen ausgeführt, wohingegen der zweite, hier einstückig mit dem Steuerkolben 15 ausgeführte Schaltkörper 13 eine Passage 13a aufweist. Diese Passage 13a ist, wenn der Schaltkörper 13 an der Verlängerung 11 anliegt, mittels einer Dichtung 12 dicht verschlossen. Hier übernimmt die Abdichtung der Passage 13a im zweiten Schaltkörper 13 durch Anliegen an der Verlängerung 11 und der Dichtung 12 die Funktion, welche bislang durch einen O-Ring zwischen Regelkörper und Schaltkörper bei herkömmlichen Ventilen erzielt war.

Die Funktion der Ausführungsform der Fig. 2 ist im wesentlichen wie oben bereits beschrieben. Wenn dabei der Druck unzulässig hoch wird, wird der Druckregelkolben 8 schließlich soweit verschoben, daß der erste Schaltkörper 6 wieder am Ventilsitz 4 abdichtet, und Damit wird die Druckluftzufuhr über den Anschluß 2 angesperrt. Der Druck kann dann nach Abheben des zweiten Schaltkörpers 13 über dessen ausgearbeitete Passage 13a in den Raum hinter dem Druckregelkolben 7, in welchem sich auch die Druckregelfeder 8 befindet, und schließlich die Entlüftungspassage 10 im Gehäuse 9 der Druckregelfeder abgebaut werden.

## Patentansprüche

1. Ventilanordnung, insbesondere für eine Schalteinrichtung für Gangwechselgetriebe von Kraftfahrzeugen, mit einem steuerbaren Abschaltventil(4, 5, 6, 13) mit einem Ventilsitz (4), einer Feder (5) und einem Schaltkörper (6) und einem Druckregelventil mit Ventilsitz (4), Schaltkörper (6), Druckfeder (8), strömungstechnisch hinter dem Ventilsitz (4) angeordnetem Druckregelkolben (7) und Druckentlastungsöffnung (10),
wobei das Abschaltventil (4, 5, 6, 13) und das Druckregelventil (4, 6, 7, 8) schaltungstechnisch gekoppelt sind.

2. Ventilanordnung nach Anspruch 1,
**dadurch gekennzeichnet,**
**dass** der Schaltkörper (6) des Abschaltventils (4, 5, 6, 13) durch die Steuereinrichtungen (13, 14, 15) des Abschaltventils (4, 5, 6, 13) als auch zumindest mittelbar durch den Druckregelkolben (7) gegensinnig zur Druckänderung betätigbar ist.

3. Ventilanordnung nach Anspruch 1 oder 2,
**dadurch gekennzeichnet,**
**dass** das Abschaltventil durch den Ventilsitz (4) und Schaltkörper (6) des Druckregelventils (4, 6, 7, 8) gebildet ist.

4. Ventilanordnung nach Anspruch 3,
**dadurch gekennzeichnet,**
**dass** der Schaltkörper (6) in Neutral- oder Ruhestellung den Ventilsitz (4) und damit die Passage zum Druckregelkolben (7) abdichtet.

5. Ventilanordnung nach einem der Ansprüche 2 bis 4,
**dadurch gekennzeichnet,**
**dass** der Schaltkörper (6) des Abschalt- und Druckregelventils durch einen weiteren Schaltkörper (13, 15) in Öffnungsrichtung mit einer Kraft beaufschlagbar ist.

6. Ventilanordnung nach Anspruch 5,
**dadurch gekennzeichnet,**
**dass** der weitere Schaltkörper (13, 15) durch einen mit Druckmittel beaufschlagten, vorzugsweise pneumatischen, Schaltkolben gebildet ist.

7. Ventilanordnung nach Anspruch 5,
**dadurch gekennzeichnet,**
**dass** der weitere Schaltkörper elektrisch, elektromagnetisch oder elektromechanisch betätigbar ist.

8. Ventilanordnung nach Anspruch 5, 6 oder 7,
**dadurch gekennzeichnet,**
**dass** in Neutral- oder Ruhestellung der Ventilanordnung der weitere Schaltkörper (13) maximal bis zu einem Anschlag (11) am Schaltkörper (6) des Abschalt- und Druckregelventils reicht.

9. Ventilanordnung nach Anspruch 8,
**dadurch gekennzeichnet,**
**dass** ein weiterer Anschlag für den weiteren Schaltkörper (13) auf der Hinterseite des Druckregelkolbens (7) vorgesehen ist, wobei in Ruhestellung der Ventilanordnung der Abstand zwischen dem weiteren Schaltkörper (13) und dem weiteren Anschlag am Druckregelkolben (7) größer ist als der Abstand zwischen dem weiteren Schaltkörper (13) und dem ersten Anschlag (11) am Schaltkörper (6) des Abschalt- und Druckregelventils.

10. Ventilanordnung nach einem der Ansprüche 1 bis 9,
**dadurch gekennzeichnet,**
**dass** der weitere Schaltkörper (13) des Abschalt- und Druckregelventils über den gesamten Arbeitshub des Druckregelkolbens (7) an diesem dichtend und eine Passage (11a) zur Druckentlastungsöffnung (10) verschließend anliegt, allenfalls mit einer zapfenförmigen Verlängerung, und in der maximal ausgelenkten Endposition des Druckregelkolbens (7) der Schaltkörper (6) des Abschalt- und Druckregelventils wieder den Ventilsitz (4) und damit die Passage zum Druckregelkolben (7) abdichtet, während gleichzeitig der Druckregelkolben (7) den weiteren Schaltkörper (13) von der Passage (11a) abhebt und so die Passage (11a) zur Druckentlastungsöffnung (10) freigibt.

11. Ventilanordnung nach einem der Ansprüche 1 bis 9,
**dadurch gekennzeichnet,**
**dass** der Schaltkörper (6) des Abschalt- und Druckregelventils über den gesamten Arbeitshub des Druckregelkolbens (7) am weiteren Schaltkörper (13, 15) dichtend und eine zumindest teilweise durch den weiteren Schaltkörper (13, 15) führende Passage (13a) zur Druckentlastungsöffnung (10) verschließend anliegt, allenfalls mit einer zapfenförmigen Verlängerung (11), und in der maximal ausgelenkten Endposition des Druckregelkolbens (7) der Schaltkörper (6) des Abschalt- und Druckregelventils wieder den Ventilsitz (4) und damit die Passage zum Druckregelkolben (7) abdichtet, während gleichzeitig der weitere Schaltkörper (13, 15) vom Schaltkörper (6) des Abschalt- und Druckregelventils abhebt und so die Passage (13a) zur Druckentlastungsöffnung (10) freigibt.

12. Schalteinrichtung für Gangwechselgetriebe von Kraftfahrzeugen, zur Unterstützung der Schaltkraft durch Hilfsenergie, umfassend eine pneumatische Hilfseinrichtung und ein DruckluftVersorgungssystem, enthaltend eine Ventilanordnung nach einem der Ansprüche 1 bis 11.

13. Schalteinrichtung nach Anspruch 12,
**dadurch gekennzeichnet,**
**dass** das Abschaltventil (4, 5, 6, 13) und das Druckregelventil (4, 6, 7, 8) in einem gemeinsamen Gehäuse (1) angeordnet sind.

14. Schalteinrichtung nach Anspruch 12 oder 13,
**dadurch gekennzeichnet,**
**dass** die Bewegung des Schaltkörpers (6) des Abschaltventils (4, 5, 6, 13) zusätzlich zur eigenen Steuerung durch den Druckregelkolben (7) des Druckregelventils (4, 6, 7, 8) beeinflussbar ist.

## Claims

1. A valve arrangement, in particular for a switching device for change-speed gearboxes of motor vehicles, with a controllable shut-off valve (4, 5, 6, 13) with a valve seat (4), a spring (5) and a switching element (6) and a pressure-regulating valve with valve seat (4), switching element (6), pressure spring (8), pressure-regulating piston (7) arranged fluidically behind the valve seat (4), and pressure relief opening (10), wherein the shut-off valve (4, 5, 6, 13) and the pressure-regulating valve (4, 6, 7, 8) are coupled by circuitry.

2. The valve arrangement according to Claim 1,
**characterized in that**
the switching element (6) of the shut-off valve (4, 5, 6, 13) is able to be actuated by the control devices (13, 14, 15) of the shut-off valve (4, 5, 6, 13) and also at least indirectly by the pressure-regulating piston (7) in the opposite direction to the pressure change.

3. The valve arrangement according to Claim 1 or 2,
**characterized in that**
the shut-off valve is formed by the valve seat (4) and switching element (6) of the pressure-regulating valve (4, 6, 7, 8).

4. The valve arrangement according to Claim 3,
**characterized in that**
the switching element (6) in the neutral or rest position seals off the valve seat (4) and hence the passage to the pressure-regulating piston (7).

5. The valve arrangement according to one of Claims 2 to 4,
**characterized in that**
the switching element (6) of the shut-off- and pressure-regulating valve is able to be acted upon by a further switching element (13, 15) with a force in the opening direction.

6. The valve arrangement according to Claim 5,
**characterized in that**
the further switching element (13, 15) is formed by a preferably pneumatic piston actuator, acted upon by pressure medium.

7. The valve arrangement according to Claim 5,
**characterized in that**
the further switching element is able to be actuated electrically, electromagnetically or electromechanically.

8. The valve arrangement according to Claim 5, 6 or 7,
**characterized in that**
in the neutral or rest position of the valve arrangement, the further switching element (13) extends at a maximum up to a stop (11) on the switching element (6) of the shut-off- and pressure-regulating valve.

9. The valve arrangement according to Claim 9,
**characterized in that**
a further stop is provided for the further switching element (13) on the rear side of the pressure-regulating piston (7), wherein in the rest position of the valve arrangement the distance between the further switching element (13) and the further stop on the pressure-regulating piston (7) is greater than the distance between the further switching element (13) and the first stop (11) on the switching element (6) of the shut-off- and pressure-regulating valve.

10. The valve arrangement according to one of Claims 1 to 9,
**characterized in that**
the further switching element (13) of the shut-off-and pressure-regulating valve lies over the entire working stroke of the pressure-regulating piston (7) in a sealing manner against the latter, and closing a passage (11a) to the pressure relief opening (10), if necessary with a conical extension, and in the maximum travelled final position of the pressure-regulating piston (7), the switching element (6) of the shut-off-and pressure-regulating valve seals off the valve seat (4) again and hence the passage to the pressure-regulating piston (7), whilst at the same time the pressure-regulating piston (7) lifts the further switching element (13) from the passage (11a) and thus frees the passage (11a) to the pressure relief opening (10).

11. The valve arrangement according to one of claims 1 to 9,
**characterized in that**
the switching element (6) of the shut-off- and pressure-regulating valve lies over the entire working stroke of the pressure-regulating piston (7) against the further switching element (13, 15) in a sealing manner and closing a passage (13a), leading at least partially through the further switching element (13, 15) to the pressure relief opening (10), if necessary with a conical extension (11), and in the maximum travelled final position of the pressure-regulating piston (7), the switching element (6) of the shut-off-and pressure-regulating valve seals off the valve seat (4) again and hence the passage to the pressure-regulating piston (7), whilst at the same time the further switching element (13, 15) lifts from the switching element (6) of the shut-off- and pressure-regulating valve and thus frees the passage (13a) to the pressure relief opening (10).

12. A switching device for change-speed gearboxes of motor vehicles, for assisting the switching power by auxiliary energy, comprising a pneumatic auxiliary device and a compressed air supply system, containing a valve arrangement according to one of Claims 1 to 11.

13. The switching device according to Claim 12,
**characterized in that**
the shut-off valve (4, 5, 6, 13) and the pressure-regulating valve (4, 6, 7, 8) are arranged in a shared housing (1).

14. The switching device according to Claim 12 or 13,
**characterized in that**
the movement of the switching element (6) of the shut-off valve (4, 5, 6, 13), in addition to its own control, is able to influenced by the pressure-regulating piston (7) of the pressure-regulating valve (4, 6, 7, 8).

## Revendications

1. Ensemble de soupape, en particulier pour un dispositif de commutation pour boîtes de vitesse de véhicules automobiles, avec une soupape d'arrêt (4, 5, 6, 13) avec un siège de soupape (4), un ressort (5) et un corps de commutation (6) et une soupape de réglage de pression avec siège de soupape (4), corps de commutation (6), ressort de pression (8), un piston de réglage de pression (7) disposé derrière le siège de soupape (4) de façon à favoriser l'écoulement, et un orifice d'évacuation de pression (10), dans lequel la soupape d'arrêt (4, 5, 6, 13) et la soupape de réglage de pression (4, 6, 7, 8) sont couplées par le montage.

2. Ensemble de soupape selon la revendication 1,
**caractérisé en ce que**
le corps de commutation (6) de la soupape d'arrêt (4, 5, 6, 13) est actionnable dans le sens inverse pour la modification de la pression, par le dispositif de commande ' 13, 14, 15) de la soupape d'arrêt (4, 5, 6, 13) ainsi qu'au moins indirectement par le piston de réglage de pression (7).

3. Ensemble de soupape selon la revendication 1 ou 2,
**caractérisé en ce que**
la soupape d'arrêt est formée par le siège de soupape (4) et le corps de commutation (6) de la soupape de réglage de pression (4, 5, 6, 7, 8).

4. Ensemble de soupape selon la revendication 3,
**caractérisé en ce que**
dans la position neutre ou de repos, le corps de soupape (6) recouvre de façon étanche le siège de soupape (4) et donc le passage vers le piston de réglage de pression (7).

5. Ensemble de soupape selon l'une des revendications 2 à 4,
**caractérisé en ce que**
le corps de soupape (6) de la soupape d'arrêt et de réglage de pression peut être soumise à une force dans le sens d'ouverture par un autre corps de commutation (13, 15).

6. Ensemble de soupape selon la revendication 5,
**caractérisé en ce que**
l'autre corps de commutation (13, 15) est formé par un piston de commutation, de préférence pneumatique, chargé avec un moyen de pression.

7. Ensemble de soupape selon la revendication 5,
**caractérisé en ce que**
l'autre corps de soupape peut être actionné de façon électrique, électromagnétique ou électromécanique.

8. Ensemble de soupape selon la revendication 5, 6 ou 7,
**caractérisé en ce que**
dans la position neutre ou de repos de l'ensemble de soupape, l'autre corps de commutation (13) tient au maximum jusqu'à la butée (11) sur le corps de commutation (6) de la soupape d'arrêt et de réglage de pression.

9. Ensemble de soupape selon la revendication 8,
**caractérisé en ce que**
une autre butée est prévue pour l'autre corps de commutation (13), du côté arrière du piston de réglage de pression (7), l'écart entre l'autre corps de commutation (13) et l'autre butée sur le piston de réglage de pression (7) étant supérieur à l'écart entre l'autre corps de commutation (13) et la première butée (11) sur le corps de commutation (6) de la soupape d'arrêt et de réglage de pression, dans la position de repos de l'ensemble de soupape.

10. Ensemble de soupape selon l'une des revendications 1 à 9,
**caractérisé en ce que**
l'autre corps de commutation (13) de la soupape d'arrêt et de réglage de pression s'applique de façon étanche sur le piston de réglage de pression (7), sur l'ensemble de la course de travail de celui-ci, tout en fermant le passage (11a) vers l'orifice d'évacuation de pression (10), éventuellement avec un prolongement en forme de téton, et dans la position finale la plus sortie du piston de réglage de pression (7), le corps de commutation (6) de la soupape d'arrêt et de réglage de pression recouvre à nouveau de façon étanche le siège de soupape (4) et donc le passage vers le piston de réglage de pression (7), tandis que le piston de réglage de pression (7) soulève simultanément l'autre corps de commutation (13) du passage (11a), tout en libérant ainsi le passage (11a) vers l'orifice d'évacuation de pression (10).

11. Ensemble de soupape selon l'une des revendications 1 à 9,
**caractérisé en ce que**
le corps de commutation (6) de la soupape d'arrêt et de réglage de pression s'applique de façon étanche sur l'autre corps de commutation (13, 15), sur l'ensemble de la course de travail du piston de réglage de pression (7), tout en fermant un passage (13a) vers l'orifice d'évacuation de pression (10) traversant au moins partiellement l'autre corps de commutation (13, 15), éventuellement avec un prolongement en forme de téton (11), et dans la position finale la plus sortie du piston de réglage de pression (7), le corps de commutation (6) de la soupape d'arrêt et de réglage de pression recouvre à nouveau de façon étanche le siège de soupape (4) et donc le passage vers le piston de réglage de pression (7), tandis que l'autre corps de commutation (13, 15) se soulève simultanément du corps de commutation (6) de la soupape d'arrêt et de réglage de pression, tout en libérant ainsi le passage (13a) vers l'orifice d'évacuation de pression (10).

12. Dispositif de commutation pour boîtes de vitesses de véhicules automobiles, pour le soutien de la force de commutation par énergie auxiliaire, comprenant un dispositif auxiliaire pneumatique et un système d'alimentation en air, contenant l'ensemble de soupape selon l'une des revendications 1 à 11.

13. Dispositif de commutation selon la revendication 12,
**caractérisé en ce que**
la soupape d'arrêt (4, 5, 6, 13) et la soupape de réglage de pression (4, 6, 7, 8) sont placées dans un boîtier commun (1).

14. Dispositif de commutation selon la revendication 12 ou 13,
**caractérisé en ce que**
le mouvement du corps de commutation (6) de la soupape d'arrêt (4, 5, 6, 13) peut être influencé par le piston de réglage de pression (7) de la soupape de réglage de pression (4, 6, 7, 8), en plus de sa propre commande.
